# DEMANDE DE BREVET EUROPEEN

(11) **EP 1 245 434 A1**
(43) Date de publication de la demande: **02.10.2002**
(21) Numéro de dépôt: 02290709.1
(22) Date de dépôt: 20.03.2002
(51) Int. Cl.: B60N 2/02, B60N 2/44, F16C 1/26

(54) **Dispositif de réglage pour le siège de véhicule automobile**

(30) Priorité: 20.03.2001 FR 0103786
(71) Demandeur: Inderflex - Technoflex, 77820 Le Chatelet en Brie (FR)
(72) Inventeur: Tores, Denis, 77530 Vaux le Penil (FR)
(74) Mandataire: Geismar, Thierry

(57) **Abrégé**

L'invention concerne un dispositif de réglage pour siège de véhicule automobile, comprenant au moins une glissière (1, 2) de réglage montée sur la structure du véhicule et des moyens réglables (3, 4) de fixation du siège sur ladite glissière.

Ce dispositif comprend un moteur d'entraînement (5) disposant d'au moins une sortie tournante (6, 7), et un câble de transmission (8, 9) gainé entre la sortie dudit moteur d'entraînement et lesdits moyens de fixation, agencé pour déplacer lesdits moyens de fixation le long de ladite glissière de réglage en réponse à une rotation de ladite sortie. La gaine du câble peut être floquée à son intérieur.

## Description

La présente invention concerne un dispositif de réglage pour siège de véhicule automobile, et plus particulièrement un tel dispositif comprenant au moins une glissière de réglage montée sur la structure du véhicule et des moyens réglables de fixation du siège sur ladite glissière.

On connaît de tels dispositifs qui permettent notamment de régler la distance du siège du conducteur ou du passager avant à la planche de bord. Certains de ces dispositifs sont motorisés.

Un des principaux inconvénients de ces dispositifs réside toutefois dans les bruits mécaniques qu'ils engendrent lors de leur fonctionnement.

La présente invention vise à fournir un dispositif perfectionné du type mentionné ci-dessus.

Plus particulièrement, l'invention a pour but de fournir un dispositif de réglage pour siège de véhicule automobile qui permette d'amortir les bruits mécaniques de fonctionnement.

L'invention a également pour but de fournir un dispositif de réglage pour siège de véhicule automobile dont le fonctionnement soit plus souple et plus fiable.

A cet effet, l'invention a pour objet un dispositif de réglage pour siège de véhicule automobile, comprenant au moins une glissière de réglage montée sur la structure du véhicule et des moyens réglables de fixation du siège sur ladite glissière, caractérisé par le fait qu'il comprend un moteur d'entraînement disposant d'au moins une sortie tournante, et un câble de transmission gainé entre la sortie dudit moteur d'entraînement et lesdits moyens de fixation, agencé pour déplacer lesdits moyens de fixation le long de ladite glissière de réglage en réponse à une rotation de ladite sortie.

Un tel dispositif à câble de transmission permet de réduire les bruits de fonctionnement du dispositif.

Dans un mode de réalisation particulier, la gaine dudit câble de transmission comprend au moins un ressort hélicoïdal muni à sa surface intérieure d'un flocage de protection.

On a pu observer qu'un tel agencement dans lequel la gaine est floquée intérieurement présentait un amortissement sonore optimal. Le flocage permet d'assurer un isolement mécanique entre le câble et la gaine. Le fait de former ce flocage sur la gaine donne les meilleurs résultats du point de vue acoustique.

On observera que de tels câbles à gaine floquée sont connus en eux-mêmes, par exemple par le document US-A-3 389 579. Il n'a toutefois jamais été suggéré de les utiliser dans la commande du réglage d'un siège de véhicule automobile ou dans une application similaire.

Dans un mode de réalisation particulier, ledit ressort hélicoïdal est formé à partir d'une bande métallique enroulée en hélice, la face de ladite bande métallique faisant face à l'axe de ladite gaine étant munie dudit flocage.

Plus particulièrement, les bords de ladite bande métallique peuvent être arrondis.

Ladite bande métallique peut notamment être réalisée en acier, par exemple en acier à haute résistance mécanique.

Ledit flocage peut être réalisé en fibres polyamides.

Egalement dans un mode de réalisation particulier, la gaine dudit câble de transmission comprend en outre une enveloppe tubulaire extérieure en matière plastique.

Cette enveloppe tubulaire extérieure peut être réalisée notamment en PVC.

On décrira maintenant, à titre d'exemple non limitatif, un mode de réalisation particulier de l'invention, en référence aux dessins schématiques annexés dans lesquels :
- la figure 1 est une vue en perspective des éléments essentiels d'un dispositif selon l'invention ; et
- la figure 2 est une vue à plus grande échelle en coupe axiale de la gaine du câble utilisée dans ce dispositif.

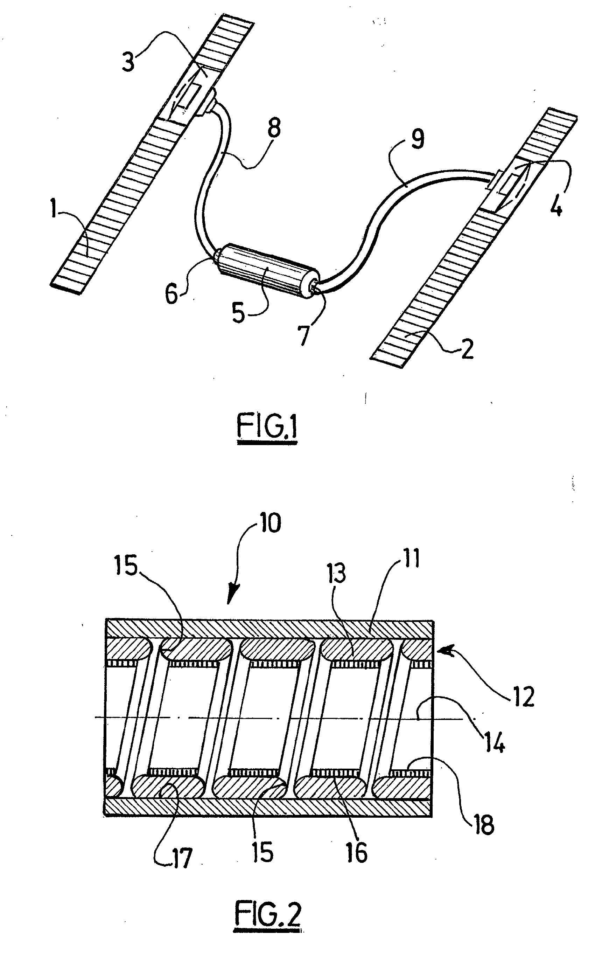

On voit à la figure 1 deux glissières 1 et 2 fixées par tout moyens convenables sur la structure non représentée d'un véhicule automobile. Ces glissières présentent des crans de réglage dont la fonction sera décrite ci-après.

Les glissières 1 et 2 supportent l'armature d'un siège, également non représentée, du véhicule, dont le déplacement et la fixation par rapport aux glissières sont assurés par des réducteurs 3 et 4 respectivement munis de roues dentées coopérant avec les crans précités des glissières 1 et 2.

Un moteur électrique 5 est fixé à la structure du véhicule ou, en variante, à l'armature du siège. Ce moteur 5 possède deux sorties tournantes 6 et 7. Ces sorties 6 et 7 sont reliées par des câbles gainés 8 et 9 aux réducteurs 3 et 4 respectivement.

La gaine 10 d'un tel câble est représentée en coupe à la figure 2. Le câble lui-même, non représenté dans cette figure par souci de clarté du dessin, est de tout type convenable, et plus particulièrement est un câble torsadé de type conventionnel.

La gaine 10 est composée en premier lieu d'une enveloppe tubulaire extérieure 11 réalisée en PVC.

L'enveloppe 11 entoure un ressort hélicoïdal 12 réalisé sous la forme d'une bande 13 en acier à haute résistance enroulée hélicoïdalement autour de l'axe 14 du câble 8 ou 9 du dispositif. La bande 13 a ses deux bords longitudinaux 15 arrondis et, entre ces bords, un méplat extérieur 16 et un méplat intérieur 17.

Le méplat intérieur 17 est revêtu par tout procédé connu, par exemple par voie électrostatique, d'un flocage 18 qui peut être en brins de fibres polyamides.

Des raccords de tout type connu relient les extrémités des câbles gainés 8 et 9 aux réducteurs 3 et 4 et aux sorties du moteur 5.

Lorsque ce moteur est alimenté, il entraîne les câbles en rotation à l'intérieur de leurs gaines. Ces câbles entraînent à leur tour les réducteurs 3 et 4 ce qui à pour effet de déplacer le siège le long des glissières 1 et 2.

## Revendications

1. Dispositif de réglage pour siège de véhicule automobile, comprenant au moins une glissière (1, 2) de réglage montée sur la structure du véhicule et des moyens réglables (3, 4) de fixation du siège sur ladite glissière, ledit dispositif comprenant en outre un moteur d'entraînement (5) disposant d'au moins une sortie tournante (6, 7), et un câble de transmission (8, 9) gainé entre la sortie dudit moteur d'entraînement et lesdits moyens de fixation, agencé pour déplacer lesdits moyens de fixation le long de ladite glissière de réglage en réponse à une rotation de ladite sortie, **caractérisé en ce que** la gaine dudit câble de transmission comprend au moins un ressort hélicoïdal (13) muni à sa surface intérieure d'un flocage de protection (18).

2. Dispositif selon la revendication 1, dans lequel ledit ressort hélicoïdal est formé à partir d'une bande métallique enroulée en hélice, la face (16) de ladite bande métallique faisant face à l'axe de ladite gaine étant munie dudit flocage.

3. Dispositif selon la revendication 2, dans lequel les bords (15) de ladite bande métallique sont arrondis.

4. Dispositif selon l'une quelconque des revendications 1 à 3, dans lequel ladite bande métallique est réalisée en acier.

5. Dispositif selon l'une quelconque des revendications 1 à 4, dans lequel ledit flocage est réalisé en fibres polyamides.

6. Dispositif selon l'une quelconque des revendications 1 à 5, dans lequel la gaine dudit câble de transmission comprend en outre une enveloppe tubulaire extérieure (11) en matière plastique.

7. Dispositif selon la revendication 6, dans lequel ladite enveloppe tubulaire extérieure est réalisée en PVC.
